# EUROPEAN PATENT SPECIFICATION

(11) **EP 0 590 422 B1**
(45) Date of publication and mention of the grant of the patent: **28.05.1997**
(21) Application number: 93114913.2
(22) Date of filing: 16.09.1993
(51) Int. Cl.: D06N 7/00

(54) **Multi-layer carpet tile assembly**
Mehrschichtige Teppichfliese
Dalle de tapis multicouche

(30) Priority: 30.09.1992 US 953616
(43) Date of publication of application: 06.04.1994
(73) Proprietor: HERCULES INCORPORATED, Wilmington Delaware 19894-0001 (US)
(72) Inventor: Goss, Raymond Walter, Newark, Delaware 19711 (US)
(74) Representative: Lederer, Franz, Dr.

(56) References cited:
- EP-A- 0 171 201
- EP-A- 0 176 346
- EP-A- 0 297 611
- WO-A-90/00967
- LU-A- 65 498

## Description

This invention relates to the construction of fabric-pile carpet tiles or broadloom carpeting having two or more layers, including at least one hot-melt bonding layer.

The economic advantages and convenience of carpet tiles, as compared to traditional broadloom carpeting are well known, for instance from U.S. Patent 5,004,638. That patent also describes production and quality control problems of carpet tiles.

For example, a relatively heavy extrusion backing and adhesive layer arranged between the backing and primary carpet tile facing must supply most of the flexibility, weight and structural strength of conventional carpet tile. Not many conventional tile backing components however, are capable of satisfying all of these needs. Furthermore, production and environmental demands limit the choice of facing and backing combinations that can be used to bind carpet facing and backing layers under high speed production conditions.

The said US-A-5 004 638 discloses a primary carpet facing component comprising tufted or untufted nylon, acrylic, polyester, polypropylene or wool fibers secured to a bonding layer comprising a hot melt adhesive, and preferably precoated with a latex or resin composition. It also discloses a backing component comprising a flexible base layer preferably consisting of a hot melt adhesive material, such as a combination of an ethylene/vinyl acetate copolymer and an aromatic or aliphatic hydrocarbon resin, and including one or more scrim layers between the base layer and the primary carpet facing component, the purpose of which is to provide additional weight and strength to the base component. The difficulties encountered in using a conventional polyvinylchoride (PVC) backing are mentioned, and the possible need to use a wide variety of different materials for the facing and backing components to meet the desired specifications for the product.

The various materials that may be used in the formulation of the components of the carpet structure are described in U.S. Patent 4,576,665, particularly with reference to non-tufted pile fabrics, and the problem of possible separation of layers during use. The well-known formulations and uses of hot melt adhesives and other conventional bonding compositions such as polyvinyl chloride plastisol (PVC) compositions are also described in the said US-A-4 576 665.

A method for manufacturing carpet tiles is disclosed in EP-A-0 171 201. These carpet tiles comprise a carpet base material like natural or synthetic fibers which may comprise a hot-melt adhesive, a fabric base like glass fiber and a backing material like polyvinyl chloride which may comprise a plasticizer. These carpet tiles have an excellent dimensional stability.

A decorative covering comprising a polyvinyl chloride layer, a film barrier and an adhesive layer is disclosed in LU-A 65 498. The film barrier may consist of a polyamide, a polyester, a polyfluoro vinyl or a polypropylene and is impermeable to plasticizers which are present in the polyvinyl chloride layer.

There is a need for a carpet tile structure that permits the use of different materials for precoatings and adhesives in the facing component, on the one hand, and for the backing component on the other. In particular, there is a need to provide means for blocking the migration of vinyl plasticizers in one or more of the layers to a hot melt adhesive layer; for instance, between PVC backings and conventional hot melt adhesive materials in the facing layers and or vice versa, thus avoiding the deleterious effect of such migration on adhesive strength and achieving a combination of maximum pile bind, abrasion resistance, and resistance to edge unraveling.

According to the invention, a fabric-pile carpet construction comprised of a tufted or non-tufted facing layer of nylon, acrylic, polypropylene, or wool fibers secured to a bonding layer selected from the group consisting of a hot melt adhesive and a polyvinylchloride (PVC) plastisol adhesive, and a different backing layer selected from the said group, one of the facing layer and the backing layer containing a vinyl plasticizer, and a polyester or fiberglass scrim located between the facing layer and the backing layer, is characterized in that the polyester or fiberglass scrim, preferably having a Frazer Air Permeability Value not over 137.2 m^{3/}m²/min (450 cubic ft./sq.ft./min.), is coated with a cross-linkable vinyl acetate-based latex adhesive, preferably a vinyl acetate-ethylene copolymer latex adhesive, that has an affinity for adhering to polyvinyl-chloride and formsa chemical barrier located between the facing layer and the backing layer that tends to block the migration of a vinyl plasticizer between and adhered to the bonding layer and the backing layer.

Because the barrier coated scrim adheres effectively to both hot melt adhesive layers and polyvinylchloride (PVC) plastisol adhesive layers, it effectively inhibits the migration of the vinyl plasticizers that are compatible with and tend to degrade hot melt adhesives.

Such use of the barrier coated scrim, consisting of a nonwoven polyester or fiberglass sheet impregnated with the vinyl acetate-ethylene copolymer latex adhesive, is particularly adapted for the intermediate, relatively heavy layers of carpet tiles, but it can also be adapted to broadloom applications. In either case, the layers separated by the scrim are various combinations, known to those skilled in the art, of conventional materials.

The barrier coated scrim can be comprised of a polyester or fiberglass scrim that has been coated with a vinyl ester-ethylene latex adhesive compound, preferably a vinyl acetate-ethylene latex. Any conventional polyester or fiberglass scrim may be used, but preferably it should have a Frazer Air Permeability value not over 137.2 m^{3/}m²/min because a larger mesh size may make it difficult to control the latex adhesive application, thus tending to increase the stiffness of the coated substrate. Most preferably, it should have a permeability value of about 400. Such a preferred polyester scrim is manufactured by Freudenberg Spun Web Co., Durham, North Carolina under the product designation LDH 7113. It has a Frazer Air Permeability value of 121.9 m^{3/}m²/min to 137.2 m^{3/}m²/min (400 to 450 cubic ft./sq./ft./min). A preferred fiberglass scrim is manufactured by Schuller Mats & Reinforcements, a division of Schuller International Inc., Toledo, Ohio under the product designation R-8395. It has the same Frazer Air Permeability value as the above-mentioned polyester scrim.

Any cross-linkable vinyl acetate-based latex adhesive formulation, that can readily be determined to have an affinity for adhering to polyvinylchloride, may be used in order to provide a barrier for the migration of vinyl plasticizers between PVC backings and conventional hot melt adhesive materials in the facing layers and/or vice versa. It should not contain formaldehyde, and also should be sufficiently flexible when cross-linked to avoid contributing stiffness to the tile structure. The preferred barrier coating is a cross-linkable vinyl acetate-ethylene latex formulation that has excellent adhesion to polyvinylchloride as well as to the scrim material and hot-melt adhesive used.

The most preferred barrier material is available from Reichhold Chemicals, Inc., Research Triangle Park, North Carolina under the tradename Tylac® synthetic latex and under the product designation 99757-00.

The appropriate composition of the barrier latex coating can be identified by routine adhesive test evaluations of a limited number of available latex blends, and the desirable volume of the barrier latex coating can readily be determined for any specific application through routine testing, as required to prevent a harmful degree of vinyl plasticizer migration as reflected in the delamination strength. The exact formulations are normally proprietary information owned by the suppliers and the manufacturing techniques employed by the scrim manufacturers and the type and geometry of the fibers used are proprietary information owned by the suppliers, who are willing to prepare appropriate materials specifically to order if desired.

The facing layer of the carpet structure, normally comprising nylon, acrylic, polypropylene, or wool fibers, may be conventially tufted into a woven or nonwoven scrim, or secured by direct bond to the bonding layer. It may be preferable to apply a precoat to the fiber layers of the facing layer, which may be a hot melt precoat resin comprising an alkylaryl hydrocarbon resin or an aliphatic hydrocarbon resin, a vinyl acetate/ethylene copolymer latex adhesive, or a PVC plastisol precoat.

The hot melt adhesive compositions that may be used in the bonding layer include the wide range of conventional hot melt adhesives that have been available for many years. Typically such compositions may have a melt viscosity of less than about 200Pa s (200,000 cps), preferably less than about 100 Pa s at a 149°C (300°F) application temperature. Examples include, for instance, blends of ethylene-vinyl ester copolymers, petroleum waxes and thermo-plastic resins, as disclosed in U.S. Pat. No. 3,551,231, the disclosure of which is incorporated herein by reference. Most preferably such compositions have a melt viscosity of 10,000 to 15,000 mPa·s (cps). at the same application temperature.

Other blends may include ethylene-vinyl ester copolymers combined with low molecular weight, low density polyethylene microcrystalline waxes, and aromatic or aliphatic thermoplastic hydrocarbon resins. Preferably the combination includes ethylene-vinyl acetate and the alkaryl hydrocarbon resin available from Hercules Incorporated under the designation Piccovar® CB48 Resin. Conventional additives to improve heat resistance, flammability or surface abrasion are included as required. Suitable particulate fillers such as calcium carbonate are conventionally added. An alternative bonding material is PVC plastisol.

Preferably the backing layer comprises either a conventional PVC plastisol, including the appropriate plasticizers and fillers, or a conventional hot melt back-coating compound, preferably the above-mentioned resin designated as Piccovar® CB48 Resin. The volume of PVC coating is defined by the manufacturers internal product specifications. An alternative backing material is PVC foam.

The optional combinations of layers that can be used with the barrier layer according to the invention are as follows:

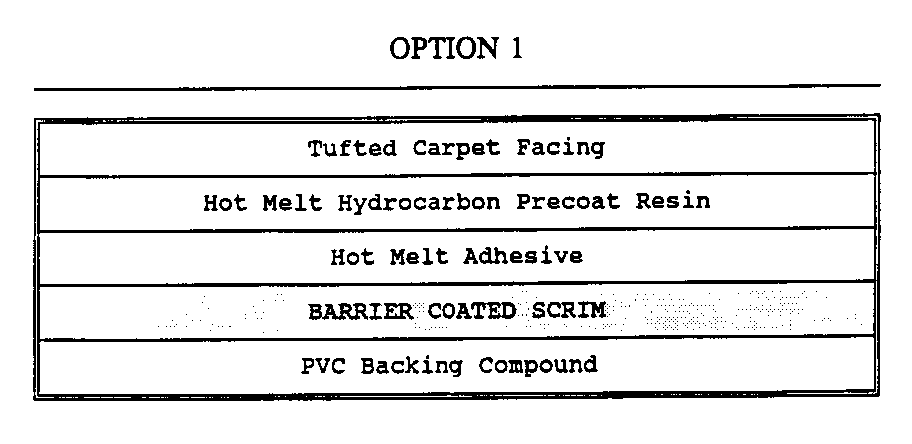

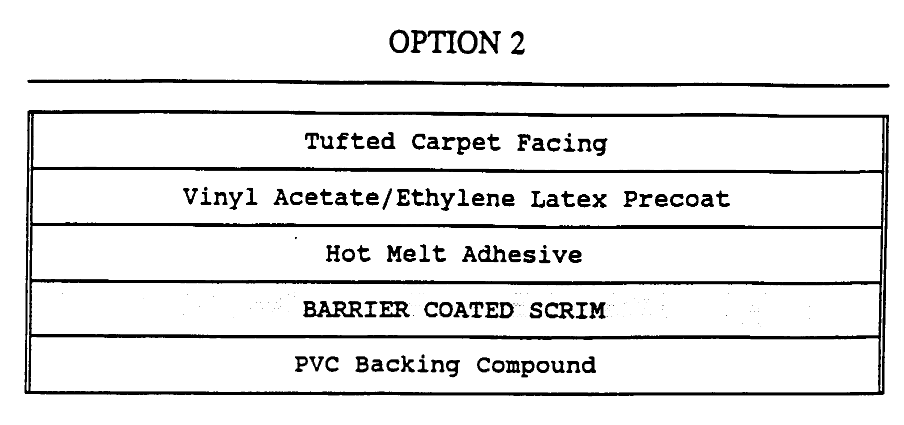

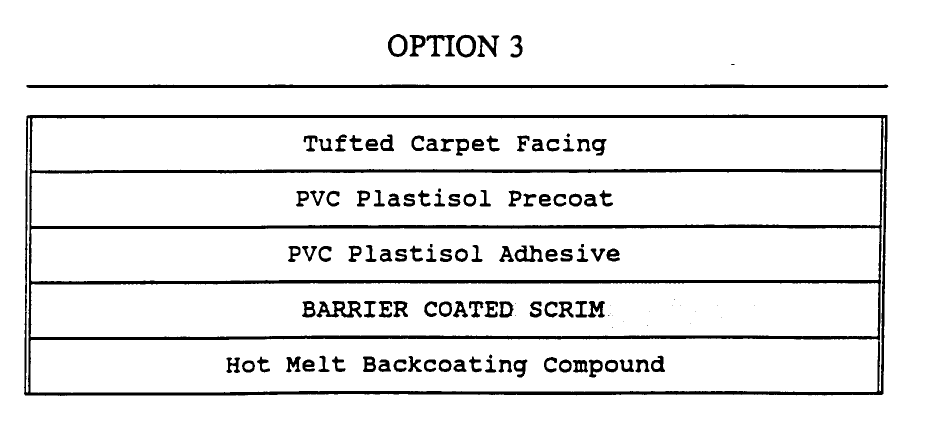

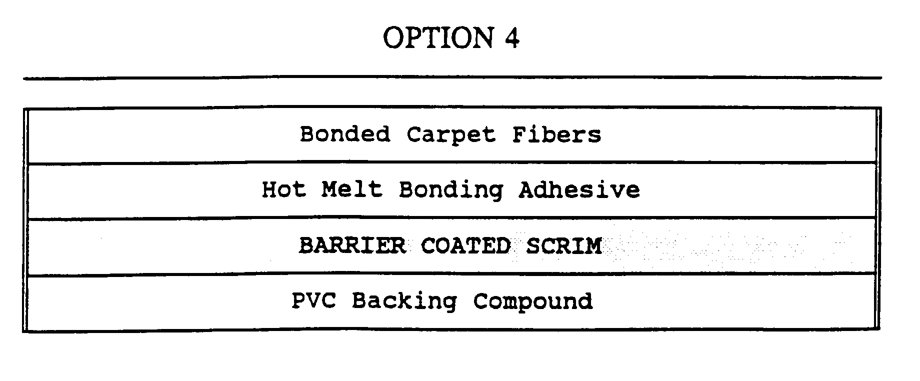

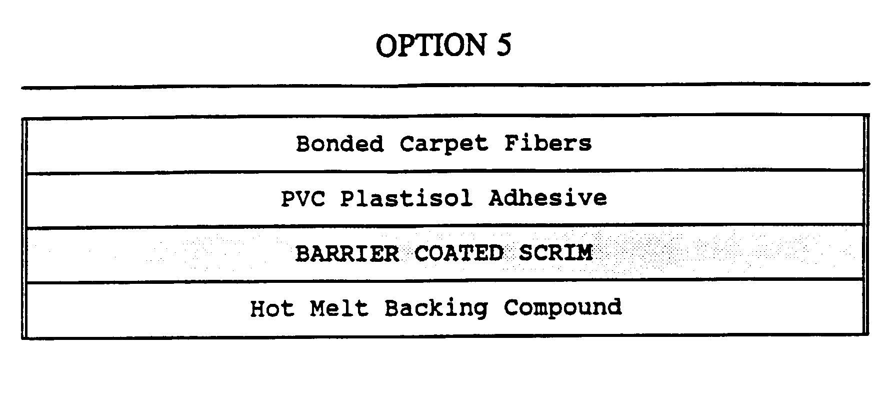

Optionally, in addition to the barrier layer according to the invention, a woven fiberglass scrim having, for instance, conventional 6 x 6 or 2 x 3 weave construction, may be inserted between the bonding layer and the barrier layer to impart additional stability to the structure. Also optionally a woven scrim can be introduced into a hot melt or PVC backing layer if the type of carpet construction involved would benefit from such reinforcement.

## Claims

1. A fabric-pile carpet construction comprising (1) a facing layer comprising nylon, acrylic, polypropylene, or wool fibers secured to a bonding layer selected from the group consisting of a hot melt adhesive and a polyvinylchloride (PVC) plastisol adhesive, and (2) a different backing layer selected from the said group, one of the facing layer and the backing layer containing a vinyl plasticizer, and (3) a polyester or fiberglass scrim located between the facing layer and the backing layer, characterized in that the polyester or fiberglass scrim is coated with a cross-linkable vinyl acetate-based latex adhesive, preferably a vinyl acetate-ethylene copolymer latex adhesive, that has an affinity for adhering to polyvinyl-chloride and forms a chemical barrier.

2. A fabric-pile carpet construction as claimed in claim 1, further characterized in that the scrim has a Frazer Air Permeability Value not over 137.2 m^{3/}m²/min.

3. A fabric-pile carpet construction as claimed in claim 2, further characterized in that the scrim has a Frazer Air Permeability Value not over 121.2 m^{3/}m²/min.

4. A fabric-pile carpet construction as claimed in claim 1, 2, or 3, further characterized in that the bonding layer comprises a hot melt adhesive composition comprising an ethylene-vinyl ester copolymer and an aromatic or aliphatic hydrocarbon resin.

5. A fabric-pile carpet construction as claimed in claim 4, further characterized in that the ethylene-vinyl ester copolymer is an ethylene-vinyl acetate copolymer.

6. A fabric-pile carpet construction as claimed in claim 4 or 5, further characterized in that the hot melt adhesive composition has a melt viscosity of less than about 100,000 mPa·s (cps) at an application temperature of 149°C.

7. A fabric-pile carpet construction as claimed in claim 6, further characterized in that the hot melt adhesive composition has a melt viscosity in the range of 10,000 mPa·s (cps) to 15,000 mPa·s (cps) at an application temperature of 149 °C (300°F).

8. A fabric-pile carpet construction as claimed in any of the preceding claims, further characterized in that the backing layer comprises a polyvinylchloride (PVC) plastisol.

9. A fabric-pile carpet construction as claimed in any of the preceding claims, further characterized in that the vinyl acetate-based latex adhesive is a vinyl acetate-ethylene copolymer latex adhesive.

## Patentansprüche

1. Florgewebe-Teppichkonstruktion, umfassend (1) eine Deckschicht umfassend Nylon-, Acryl-, Polypropylen- oder Wollfasern, die an einer Bindeschicht befestigt ist, ausgewählt aus einem Schmelzkleber und einem Polyvinylchlorid-(PVC)-Plastisolkleber, und (2) eine davon verschiedene Rückenbeschichtung, ausgewählt aus der vorstehenden Gruppe, wobei die Deckschicht oder die Rückenbeschichtung einen Vinylweichmacher enthält, und (3) einen Polyester- oder Glasfaser-Scrim, der zwischen der Deckschicht und der Rückenbeschichtung angebracht ist, dadurch gekennzeichnet, daß der Polyester- oder Glasfaser-Scrim mit einem vernetzbaren Latex-Kleber auf Vinylacetatbasis, vorzugsweise einem Vinylacetat-Ethylen-Copolymer-Latex-Kleber, beschichtet ist, der eine Affinität zum Haften an Polyvinylchlorid aufweist und eine chemische Barriere bildet.

2. Florgewebe-Teppichkonstruktion nach Anspruch 1, dadurch gekennzeichnet, daß der Scrim einen Luftdurchlässigkeitswert nach Frazer von 137,2 m³/m²/min nicht überschreitet.

3. Florgewebe-Teppichkonstruktion nach Anspruch 2, dadurch gekennzeichnet, daß der Scrim einen Luftdurchlässigkeitswert nach Frazer von 121,2 m³/m²/min nicht überschreitet.

4. Florgewebe-Teppichkonstruktion nach Anspruch 1, 2 oder 3, dadurch gekennzeichnet, daß die Bindeschicht eine Schmelzkleberzusammensetzung umfaßt, umfassend ein Ethylen-Vinylester-Copolymer und ein aromatisches oder aliphatisches Kohlenwasserstoffharz.

5. Florgewebe-Teppichkonstruktion nach Anspruch 4, dadurch gekennzeichnet, daß das Ethylen-Vinylester-Copolymer ein Ethylen-Vinylacetat-Copolymer ist.

6. Florgewebe-Teppichkonstruktion nach Anspruch 4 oder 5, dadurch gekennzeichnet, daß die Schmelzkleberzusammensetzung bei einer Anwendungstemperatur von 149°C eine Schmelzviskosität von weniger als etwa 100 000 mPa s (cps) aufweist.

7. Florgewebe-Teppichkonstruktion nach Anspruch 6, dadurch gekennzeichnet, daß die Schmelzkleberzusammensetzung bei einer Anwendungstemperatur von 149°C (300°F) eine Schmelzviskosität im Bereich von 10 000 mPa s (cps) bis 15 000 mPa s (cps) aufweist.

8. Florgewebe-Teppichkonstruktion nach einem der vorstehenden Ansprüche, dadurch gekennzeichnet, daß die Rückenbeschichtung ein Polyvinylchlorid-(PVC)-Plastisol umfaßt.

9. Florgewebe-Teppichkonstruktion nach einem der vorstehenden Ansprüche, dadurch gekennzeichnet, daß der Latex-Kleber auf Vinylacetatbasis ein Vinylacetat-Ethylen-Copolymer-Latex-Kleber ist.

## Revendications

1. Structure de tapis à tissu et à poils, comprenant (1) une couche de dessus se composant de fibres de nylon, d'acrylique, de polypropylène ou de laine fixées à une couche d'ancrage choisie dans le groupe constitué par un adhésif thermofusible et un adhésif de plastisol de poly(chlorure de vinyle) (PVC), (2) une couche de dossier différente choisie dans ledit groupe, l'une de la couche de dessus et de la couche de dossier contenant un plastifiant vinylique, et (3) un non-tissé à couches superposées biaises en polyester ou en fibres de verre, disposé entre la couche de dessus et la couche de dossier, caractérisée en ce que le non-tissé en polyester ou en fibres de verre est revêtu d'un adhésif de latex à base d'acétate de vinyle réticulable, de préférence d'un adhésif de latex à base de copolymère acétate de vinyle/éthylène, qui a une affinité pour adhérer au poly(chlorure de vinyle) et constitue une barrière chimique.

2. Structure de tapis à tissu et à poils selon la revendication 1, caractérisée en outre en ce que le non-tissé à couches superposées biaises a une valeur de perméabilité à l'air de Frazer non supérieure à 137,2 m³/m²/min.

3. Structure de tapis à tissu et à poils selon la revendication 2, caractérisée en outre en ce que le non-tissé à couches superposées biaises a une valeur de perméabilité à l'air de Frazer non supérieure à 121,2 m³/m²/min.

4. Structure de tapis à tissu et à poils selon l'une quelconque des revendications 1 à 3, caractérisée en outre en ce que la couche d'ancrage est formée d'une composition adhésive thermofusible comprenant un copolymlère éthylène/ester vinylique et une résine d'hydrocarbure aromatique ou aliphatique.

5. Structure de tapis à tissu et à poils selon la revendication 4, caractérisée en outre en ce que le copolymlère éthylène/ester vinylique est un copolymère éthylène/acétate de vinyle.

6. Structure de tapis à tissu et à poils selon la revendication 4 ou 5, caractérisée en outre en ce que la composition adhésive thermofusible a une viscosité à l'état fondu de moins de 100 000 mPa.s (cps) environ à une température d'application de 149°C.

7. Structure de tapis à tissu et à poils selon la revendication 6, caractérisée en outre en ce que la composition adhésive thermofusible a une viscosité à l'état fondu comprise entre 10 000 mPa.s (cps) et 15 000 mPa.s (cps) à une température d'application de 149°C (300°F).

8. Structure de tapis à tissu et a poils selon l'une quelconque des revendications 1 à 7, caractérisée en outre en ce que la couche de dossier est faite de plastisol de poly(chlorure de vinyle) (PVC).

9. Structure de tapis à tissu et à poils selon l'une quelconque des revendications 1 à 8, caractérisée en outre en ce que l'adhésif de latex à base d'acétate de vinyle est un adhésif de latex à base de copolymère acétate de vinyle/éthylène.
